# FASCICULE DE BREVET EUROPEEN

(11) **EP 2 043 445 B1**
(45) Date de publication et mention de la délivrance du brevet: **18.11.2009**
(21) Numéro de dépôt: 07731465.6
(22) Date de dépôt: 16.05.2007
(51) Int. Cl.: A01N 63/00, A01N 63/04

(54) **UTILISATION D'INOCULA FONGIQUES POUR L'AMELIORATION DE LA PRODUCTION MARAICHERE**
VERWENDUNG VON PILZLICHEN INOKULA FÜR DIE VERBESSERUNG DER PRODUKTION IN DER GEWERBSGÄRTNEREI
USE OF FUNGAL INOCULA FOR IMPROVING MARKET GARDENING PRODUCTION

(30) Priorité: 25.07.2006 FR 0606793
(43) Date de publication de la demande: 08.04.2009
(73) Titulaire: Institut de Recherche pour le Développement ( IRD), 75480 Paris Cedex 10 (FR)
(72) Inventeur: DUPONNOIS, Robin, 71640 Mercurey (FR); LEPAGE, Michel, 77760 Larchant (FR)
(74) Mandataire: Grosset-Fournier, Chantal Catherine
(86) Numéro de dépôt international: PCT/FR2007/000829
(87) Numéro de publication internationale: WO 2008/012400

(56) Documents cités:
- EP-A2- 0 354 491
- WO-A2-01/52655
- FR-A1- 2 747 016
- DATABASE CABA [Online] CADET, P. ET AL: "Termites and plant parasitic nematodes in sugarcane in KwaZulu-Natal" XP002411371 extrait de STN Database accession no. 2003:96736 & PROCEEDINGS OF THE ANNUAL CONGRESS - SOUTH AFRICAN SUGAR TECHNOLOGISTS' ASSOCIATION, NO. 76, PP. 160-161. PUBLISHED AS A CD. PUBLISHER: SOUTH AFRICAN SUGAR TECHNOLOGISTS' ASSOCIATION. MOUNT EDGECOMBE PRICE: JOURNAL ARTICLE; CONFERENCE PAPER . MEETIN, 2002,
- DATABASE CA [Online] CHEMICAL ABSTRACTS SERVICE, COLUMBUS, OHIO, US; AMUND, O. O. ET AL: "A study of microbial composition and lignocellulose degradation in the mound soil of Macrotermes bellicosus Smeathman" XP002411372 extrait de STN Database accession no. 1988:527899 & MICROBIOS LETTERS , 37(146), 69-74 CODEN: MILEDM; ISSN: 0307-5494, 1988,
- DATABASE CA [Online] CHEMICAL ABSTRACTS SERVICE, COLUMBUS, OHIO, US; KUHNIGK, THOMAS ET AL: "Degradation of dimeric lignin model compounds by aerobic bacteria isolated from the hindgut of xylophagous termites" XP002411373 extrait de STN Database accession no. 1997:555859 & JOURNAL OF BASIC MICROBIOLOGY , 37(3), 205-211 CODEN: JBMIEQ; ISSN: 0233-111X, 1997,

## Description

La présente invention concerne l'utilisation d'inocula fongiques pour l'amélioration de la production maraîchère.

Les nématodes sont des animaux vermiformes constitués d'un tube externe (cuticule) enveloppant deux tubes internes superposés : le tube digestif possédant un stylet et le tractus génital (mâle ou femelle).

Les nématodes phytoparasites appartiennent à deux ordres : les *Dorylaimida* et les *Tylenchida* dont on distingue plusieurs espèces : les nématodes des racines *(Tylenchus*, *Pratylenchus*) les nématodes à galles (*Meloidogyne*...), les nématodes des parties aériennes (*Ditylenchus*, *Aphelenchoides*)

Les nématodes à galles du genre Meloidogyne sont des ravageurs très dangereux qui attaquent une grande variété de cultures, notamment maraîchères (Sikora, R.A (2005). Nematode parasites of vegetables; dans : Luc, M., Sikora, R.A., Bridje, J. (Eds.). Plant-Parasitic nematodes in Subtropical and Tropical Agriculture. 2nd Edition. CABI Publishing, Wallington, UK, pp. 319-392).

Ils se reproduisent par ponte d'oeufs et à la sortie de l'oeuf, la larve se déplace dans le film d'eau qui recouvre les particules de terre et se dirige vers les jeunes racines des cultures. Elle perfore la paroi des cellules à l'aide de son stylet, pénètre dans la racine, se dirige vers les vaisseaux conducteurs et induit la formation de cellules géantes nécessaires à sa croissance. Il en résulte l'apparition d'une galle caractéristique qui l'enveloppe bientôt complètement et obstrue les vaisseaux conducteurs de sève. Après plusieurs mues, la larve se transforme en mâle ou en femelle. Le mâle est libéré à l'extérieur de la racine. La femelle, immobile, reste dans les tissus et pond de 1000 à 2000 oeufs englobés dans une gangue gélatineuse qui les maintient rassemblés et qui font saillie à la surface des oeufs. Plusieurs générations peuvent se succéder dans des conditions favorables et l'infestation atteint alors des niveaux considérables.

Par ailleurs, tous les oeufs n'éclosent pas en même temps, certains n'éclosent que plusieurs mois après la ponte et résistent au froid et à la sècheresse. Le sol conserve donc son potentiel infectieux pendant l'hiver ou pendant une mise en repos du sol.

Les ravages occasionnés par les nématodes ont donc nécessité le développement de moyens de lutte contre ces pathogènes.

Traditionnellement, les méthodes de lutte reposaient sur l'application dans les sols de produits chimiques, par exemple du 1,2-dibromo-3-chloropropane (DBCP) ou du bromure de méthyle, coûteux et très toxiques pour l'environnement et les utilisateurs. A l'arrêt de la production de certains d'entre eux, notamment le bromure de méthyle, (Hutchinson, C.M. et al., Nematology, 1999, 1: 407-414 ; Nico, A.I. et al., Crop Protection, 2004 23 : 581-587), d'autres techniques de luttes ont du être identifiées, en particulier (i) l'utilisation de composés chimiques moins toxiques, par exemple la combinaison de 1,3-dichloropropene et de chloropicrine (Giannakou, I.O. et al., Crop Protection, 2005 ; 24: 499-506 ; Gilreath, J.P. et al., Crop Protection, 2005 ; 24: 903-908. ), (ii) l'optimisation de techniques dite de lutte physique (solarisation, inondation des sols...) et (iii) la recherche d'antagonistes microbiens naturellement présents dans les sols (champignons parasites d'oeufs de nématodes, bactéries ) (Siddiqui, I.A. Soil Biology and Biochemistry, 2003 ; 35: 1359-1368)

Le brevet Fr 2 747 016 décrit l'utilisation de compositions de nouvelles souches de champignons avec leurs bactéries associées (*Bacillus licheniforme, Pseudomonas vesicularis*) pour le contrôle biologique de nématodes.

La demande de brevet WO 0 152 655 décrit l'utilisation de compositions comprenant de la chitine produite à partir de déchets de coquille de crustacés et d'un ou plusieurs actinomycètes spp. choisis parmi les populations du sol pour leur activité contre les agents pathogènes.

De même, le document (Jonathan et Al, Nematropica (USA), 2000, 30, (2), p. 231-240) décrit l'utilisation en serre de rhizobactéries promouvant la croissance végétale (notamment *Pseudomonas fluorescens*), d'*actinomycètes* non caractérisés et de *Pasteuria penetrans* sur la tomate et le bananier. Toutes les bactéries et les actinomycètes ont favorisé la croissance des deux espèces et inhibé le développement de galles racinaires sur la tomate ainsi que la reproduction de *Meloidogyne incognita*.

Cependant, toutes ces techniques de luttes récemment développées comportent chacune des inconvénients.

Les nématicides chimiques sont généralement trop onéreux pour être accessible à la majorité des agriculteurs des pays en voie de développement et restent encore relativement toxiques pour les utilisateurs lors de leur manipulation.

Les techniques physiques nécessitent un équipement spécifique et/ou un surcoût de travail significatif qui ne peut être envisagé dans ces régions.

Enfin, l'utilisation d'agents antagonistes des nématodes phytoparasites reste encore souvent au stade expérimental et les résultats probants et surtout reproductibles dans les conditions habituelles de production restent encore trop rares pour être généralisés et vulgarisés auprès des utilisateurs potentiels (Backman, P.A. et al., Bacteria for biological control of plant diseases ; dans: Rechcigl, N.A., Rechcigl, J.E. (Eds.), Environmentally Safe Approaches to Crop Disease Control. CRC Lewis Publishers, Boca Raton, 1997, pp. 95-109)

Les termitières sont des structures édifiées par différentes espèces de termites naturellement présentes dans des régions d'Afrique, notamment *Cubitermes* sp. ou *Macrotermes sp.*

Les intestins de termites contiennent des *Actinomycètes* et des *Pseudomonas* dont l'utilisation, après isolement de l'intestin, est connue pour la dégradation de la lignine ou de la cellulose (M B Pasti et al. Appl Environ Microbiol. 1990; 56(7) : 2213-2218 ; Watanabe Y et al. Biosci Biotechnol Biochem. 2003 Aug; 67(8):1797-801) ou en tant que méthode de décontamination du sol de certains produits chimiques (phénol, crésol, furane, trichloréthylène).

L'utilisation de poudre de termitières est également connue pour stimuler les interactions biologiques du sol et éliminer les agents pathogènes tels que les champignons Rhizoctonia spp. (Lepage M et al., Sciences au Sud- Le Journal de l'IRD ; mai/juin 2006 ; N°35)

A l'opposé, des bactéries issues de nématodes sont connues comme agent d'élimination de termites (Brevet US 7, 037, 494 ; demande US 2003/0 082 147) ou encore l'utilisation de nématodes seuls ou en association avec un régulateur ou un insecticide à action lente est connue pour exterminer les termites (demande WO 0 165 944 ; brevet JP 7 048 215)

La culture de la canne à sucre sur des termitières est également connue (Proceedings of the Annual Congress - South African Sugar Technologists' Association, 2002, n° 76, p.160-161).

L'un des buts de l'invention est de fournir un agent de lutte contre les nématodes sans apport de pesticide chimique, pour des espaces destinés aux cultures, notamment céréalières, fourragères, maraîchères, fruitières ou horticoles.

Un autre but de l'invention est également de fournir une composition permettant d'obtenir un inoculum destiné à la lutte contre les nématodes phytoparasites.

Un autre aspect de l'invention concerne un procédé de lutte contre les nématodes phytoparasites dans des espaces destinés aux cultures, notamment céréalières, fourragères, maraîchères, fruitières ou horticoles.

La présente invention concerne l'utilisation de poudre de termitières en tant qu'agent de lutte contre les nématodes phytoparasites.

Le terme agent de lutte désigne ici un composé utilisé de façon curative pour dégrader la paroi des oeufs des nématodes.

Le terme nématode phytoparasites désignent les nématodes des racines (*Tylenchus, Pratylenchus*) les nématodes à galles (*Meloidogyne*...), les nématodes des parties aériennes (*Ditylenchus, Aphelenchoides*).

Les quatre espèces les plus connues de nématodes à galles du genre *Meloidogyne* sont *M. arenaria, M. incognita, M. javanica, M. hapla.*

La poudre de termitières utilisée ici présente en outre les avantages d'être naturellement disponible en grande quantité, à un coût très faible, compatible avec les conditions socio-économiques des populations villageoises des régions africaines, d'obtenir des produits de meilleur qualité et de meilleur marché et de lutter ainsi contre la désertification et accroître le revenu des producteurs de la zone aride et semi-aride ouest-africaine.

La présente invention concerne plus particulièrement l'utilisation de poudre de termitières provenant de termites du genre *Cubitermes* ou *Macrotermes.*

Ces deux genres sont fréquemment observés dans les régions sahéliennes et soudano-sahéliennes et participent largement au fonctionnement du sol.

Selon un mode de réalisation avantageux, la présente invention concerne l'utilisation de poudre de termitières en association avec un substrat pour constituer un inoculum.

Le terme substrat désigne ici tous les types de composts réalisés à partir de résidus de culture.

Le substrat préféré est le terreau, éventuellement mélangé à du sable.

Selon un autre mode de réalisation, la présente invention concerne l'utilisation d'une quantité de poudre de termitières par rapport au substrat inférieure à 10% (m:v) et avantageusement comprise de 1% (m:v) à 10% (m:v) et préférentiellement de 1% (m:v) à 5% (m:v) et vaut plus préférentiellement 1%,
L'utilisation de 10% de poudre de termitières, mélangée au substrat, a permis, lors d'une expérimentation en milieu paysan, d'augmenter notablement la production du nombre de tomates par plant de 187 à 669 % par rapport à des plants élevés racines nues, et de 157 à 321 % par rapport aux plants élevés dans du terreau.

L'utilisation d'une quantité de poudre de termitières par rapport au substrat supérieure à 10% n'est pas envisageable compte tenu du fait que cela représenterait des quantités trop importantes de poudre de termitières.

Selon un mode de réalisation avantageux, la présente invention concerne l'utilisation telle que définie ci-dessus, dans des espaces destinés aux cultures, notamment céréalières, fourragères, maraîchères, fruitières ou horticoles.
Le terme « espaces destinés aux cultures » désigne ici tout type de contenant comprenant des éléments appropriés à la culture tels que des pots, bacs, bocaux, plaques alvéolées sans être limité à ceux-ci ainsi que tout type de terrain, pièce de terre, champ, serre....
Les cultures céréalières comprennent notamment l'orge, l'avoine et le blé.
Par culture fourragère, il faut comprendre les légumineuses telles que le trèfle, la luzerne et le lotier corniculé, et quelques graminées, comme la fléole des prés, le dactyle pelotonné.
Les cultures maraîchères comprennent notamment les tomates, les aubergines, les pommes de terre, les carottes, la laitue, le concombre, le melon, le chou, le chou-fleur, ceci de façon non limitative.
Les cultures fruitières sont constituées notamment des pommes, poires, pêches, raisin, cerise, prune, ceci de façon non limitative.
Les cultures horticoles comprennent notamment les fleurs, les plantes ornementales, ceci de façon non limitative.

La présente invention concerne également une composition comprenant :
a. de la poudre de termitières, la taille des particules constituant ladite poudre étant comprise de 1 µm à 1000 µm et préférentiellement de 1 µm à 500 µm
b. ledit substrat choisi parmi le compost provenant de résidus de culture, préférentiellement de terreau, éventuellement mélangé à du sable, le rapport terreau : sable étant avantageusement de (1:1) (v:v),
le rapport poudre de termitières : substrat étant inférieur à 10% et avantageusement compris de 1% (m:v) à 10% (m:v) et préférentiellement de 1% (m:v) à 5% (m:v) et valant plus préférentiellement 1% (m:v).

Les structures provenant des termitières sont tout d'abord broyées puis réduites en poudre. Ce broyat est ensuite tamisé à l'aide d'un tamis de mailles de 500 µm. Ce tamis permet d'éliminer les particules grossières dé la structure des termitières (type cailloux).
En règle générale, plus de 95% (en volume) de la termitière peut être broyée et réduite en poudre.
Si la poudre n'est pas broyée, les particules sont trop grossières et les structures des termitières ne peuvent être réparties de manière homogène dans le substrat.

L'utilisation de 10% de poudre de termitières, mélangée au substrat, a permis, lors d'une expérimentation en milieu paysan, d'augmenter notablement la production du nombre de tomates par plant de 187 à 669 % par rapport à des plants élevés racines nues, et de 157 à 321% par rapport aux plants élevés dans du terreau.

Selon un autre mode de réalisation avantageux de l'invention, la poudre de termitières utilisée dans la composition ci-dessus provient de termites du genre *Cubitermes* ou *Macrotermes*.

La présente invention concerne également un procédé de lutte contre les nématodes phytoparasites dans des espaces destinés aux cultures, notamment céréalières, fourragères, maraîchères, fruitières, ou horticoles, dans lesquels un inoculum a été introduit, l'inoculum étant préparé par mélange de poudre de termitières avec un substrat, ladite poudre étant éventuellement broyée..
Ce procédé a permis, lors d'une expérimentation en milieu paysan, d'augmenter notablement la production du nombre de plants de tomate par plant, de 187% à 669% par rapport à des plants élevés racines nues sans poudre de termitières, et de 157% à 321 % par rapport aux plants élevés dans du terreau sans poudre de termitières. Selon un mode de réalisation avantageux du procédé décrit ci-dessus, la taille des particules de ladite poudre de termites est comprise de 1 µm à 1000 µm (merci de nous préciser la taille des particules) et préférentiellement de 1 µm à 500 µm.

Selon un autre mode de réalisation avantageux du procédé décrit ci-dessus, la poudre de termitières provient de termites du genre *Cubitermes* ou *Macrotermes.*

Selon encore un autre mode de réalisation du procédé ci-dessus, l'inoculum est préparé par mélange de la dite poudre de termitières avec un substrat, ledit substrat étant choisi parmi le compost provenant de résidus de culture, préférentiellement de terreau, éventuellement mélangé à du sable, le rapport terreau : sable étant avantageusement (1 :1) (v:v), le rapport poudre de termitières : substrat étant compris de 1% (m:v) à 10% (m:v) préférentiellement de 1% (m:v) à 5% (m:v) et valant plus préférentiellement 1% (m:v).

Dans un mode de réalisation préféré du procédé décrit ci-dessus, l'inoculum est introduit dans des espaces destinés aux cultures à des doses comprises de 1 à 25 ml d'inoculum par élément unitaire de culture, préférentiellement de 1 à 10 ml d'inoculum, et plus préférentiellement à une dose de 1ml d'inoculum, le dit élément unitaire de culture étant notamment une graine ou une plante. Le terme « élément unitaire de culture » désigne une graine, semence, grain, fruit, pépin, noyau ou une plante permettant d'obtenir une culture céréalière, fourragère, maraîchère, fruitière, ou horticole.

Selon un mode de réalisation avantageux du procédé décrit ci-dessus, une graine est semée ou un plant est transféré par dose d'inoculum introduite dans des espaces destinés aux cultures.
L'inoculum est introduit à une dose comprise entre 1 et 25 ml dans des espaces destinés aux cultures, puis une graine est semée ou un plant est transféré dans cet inoculum. La quantité de poudre de termitières par plant, contenue dans cet inoculum est comprise de 0,01 g à 2,5 g.

Selon un autre mode de réalisation avantageux, le procédé de lutte contre les nématodes phytoparasites décrit ci-déssus comprend les étapes suivantes :
a. prélèvement et éventuellement broyage de poudre de termitières, la taille des particules de ladite poudre étant comprise de 1 µm à 1000 µm et préférentiellement de 1 µm à 500 µm,
b. préparation d'un inoculum par mélange de ladite poudre avec un substrat, ledit substrat étant choisi parmi le compost provenant de résidus de culture, préférentiellement de terreau, éventuellement mélangé à du sable, le rapport terreau : sable étant avantageusement (1 :1) (v:v), le rapport poudre de termitières: substrat étant compris de 1 % (m:v) à 10% (m:v) préférentiellement de 1% (m:v) à 5% (m:v) et valant plus préférentiellement 1% (m:v),
c. introduction de l'inoculum dans des espaces destinés aux cultures à des doses comprises.
d. semis d'une graine ou transfert d'un plant dans des espaces destinés aux cultures contenant l'inoculum.

### PARTIE EXPERIMENTALE

### Exemple 1 : Préparation des plants.

Des terrines remplies par un sol sableux préalablement stérilisé (140°C, 40 min) sont placées sous une ombrière. Des graines de tomates et d'aubergine y sont semées et arrosées sans ajout de fertilisants. Après 15 jours de culture, les plantules sont transplantées dans des plaques alvéolées.

### Exemple 2 : Préparation de l'inoculum de poudre de termitières

Les structures biogéniques de termitières sont récoltées dans leur milieu naturel, ramenées au laboratoire et réduites en poudre puis tamisées sur un tamis de 500µm.

### Exemple 3 : Préparation des mini-mottes.

Des plaques en polyéthylène sont utilisées comme supports culturaux (96 alvéoles pouvant contenir chacune un volume de substrat de 25 ml).

Du terreau, acheté sur le marché, est utilisé comme substrat de culture.

Ce terreau est mélangé à différentes doses de poudre de termitières des genres *Cubitermes* et *Macrotermes* (10%, 5%, 1%, 0% (témoin) ; m : v).

Les alvéoles des plaques alvéolées sont remplies avec ces différents mélanges et un plant est transféré dans chaque alvéole.

Les plaques ainsi préparées sont placées sous ombrière pendant deux semaines avant l'installation au champ.

Les alvéoles des plaques ainsi remplie forment des mini mottes.

### Exemple 4 : Préparation des nématodes phytoparasites du genre meloidogyne.

Des juvéniles issus de masses d'oeufs des espèces de *Meloidogyne* (nématode à galles) les plus fréquemment observées en Afrique de l'Ouest (*M. incognita, M. arenaria, M. javanica* et *M. mayaguensis*) sont inoculés à des plants d'aubergine cultivés dans du sol préalablement stérilisé (140°C, 40 min). Après 2 mois de culture, les plants seront dépotés et les nématodes récupérés selon la méthode de Seinhorst (Seinhorst, J.W., Modifications of the elutriation method for extracting nematodes from soils. Nematologica, 1962; 8 : 117-128.

### Exemple 5 : Evaluation des différentes conditions de culture

### 1. Expérience en serre en milieu contrôlé

Les plants cultivés dans les mini mottes amendées ou non avec les poudres de termitières sont transférés dans des pots remplis par un sol préalablement stérilisé. Cette technique culturale est comparée à celle habituellement pratiquée par les paysans de ces régions à savoir un transfert de plants en racines nues en utilisant de jeunes semis du même âge mais élevés dans des terrines remplies par du sable stérilisé (140°, 40 min).

Après une semaine de croissance en serre en conditions contrôlées, le sol des pots des traitements « racines nues » et « mini mottes sans amendement de poudre de termitières » est traité avec un nématicide (Aldicarb, Rhône-Poulenc Ag. Co. selon les doses prescrites par le manufacturier.

Ensuite, des juvéniles de deuxième stade (J2) de chaque espèce de *Meloidogyne* sont inoculés (ou non pour les témoins sans nématodes) à raison de 100 et 500 J2 par pot. Ce dispositif expérimental permet de
(i) mettre en évidence l'impact de la mini motte sur la prolifération des nématodes phytoparasites et
(ii) d'évaluer l'effet de la poudre de termitières contre ces nématodes par rapport à celui du nématicide employé.

L'expression « racines nues » signifie que les plants sont transférés sans mini mottes ou aucun autre additif autour des racines.

L'expression « mini mottes amendées ou non » signifie ici que l'on ajoute ou non de la poudre de termitières aux mini mottes.

### 2. Expériences au champ

Les expériences sont mises en place au début de la saison pluvieuse. Pour chaque planche, les différents traitements réalisés sont les suivants :
(1) Racines nues ;
(2) Semis en mini - mottes ;
(3) Semis en mini mottes dont le substrat a été amendé par la poudre de termitières à différentes doses.

Pour les parcelles des traitements (1) et (2), le sol de culture est traité ou non avec le nématicide Aldicarb à la dose recommandée par le manufacturier

### 3. Mesure des paramètres de croissance

Dans l'expérience en serre, après 2 mois de culture, les plants sont dépotés et leur croissance mesurée (hauteur, biomasses aériennes et racinaires) ainsi que leur degré d'infestation par chaque espèce de *Meloidogyne*.

Pour l'expérience au champ, les paramètres retenus pour mesurer l'effet des différents traitements sont :
H : Hauteur (cm),
Fl. : Nombre de fleurs,
Fr. : Nombre de fruits,
Ra. : Nombre de ramifications qui sont mesurés chaque mois.

Des prélèvements de racines sont réalisés chaque mois afin d'évaluer les taux d'infestation des plants de tomate et d'aubergine par les populations de *Meloidogyne* naturellement présentes dans ces périmètres maraîchers.

Ce procédé, à une dose de 10% de poudre de termitières, mélangée au substrat, a permis, lors d'une expérimentation en milieu paysan, d'augmenter notablement la production du nombre de tomates par plant de 187 à 669 % par rapport à des plants élevés racines nues, et de 157 à 321% par rapport aux plants élevés dans du terreau.

Diverses expériences menées en serre ont permis de montrer que la poudre de termitières était efficace sur le développement de la plante à des doses de 5 et 1 % (v :v).

## Revendications

1. Utilisation de poudre de termitières, en tant qu'agent de lutte contre les nématodes phytoparasites.

2. Utilisation selon la revendication 1, dans laquelle la poudre de termitières provient de termites du genre Cubitermes ou Macrotermes.

3. Utilisation selon la revendication 2, dans laquelle la poudre de termitières est en association avec un substrat pour constituer un inoculum.

4. Utilisation selon l'une des revendications 1 à 3, dans laquelle la quantité de poudre de termitières par rapport au substrat est inférieure à 10% (m:v) et avantageusement comprise de 1% (m:v) à 10% (m:v) et préférentiellement de 1% (m:v) à 5% (m:v) et vaut plus préférentiellement 1%.

5. Utilisation selon l'une des revendications 1 à 4, dans des espaces destinés aux cultures, notamment céréalières, fourragères, maraîchères, fruitières ou horticoles.

6. Composition comprenant :
a. de la poudre de termitières, la taille des particules constituant ladite poudre étant comprise de 1 µm à 1000 µm et préférentiellement de 1 µm à 500 µm
b. ledit substrat choisi parmi le compost provenant de résidus de culture, préférentiellement de terreau, éventuellement mélangé à du sable, le rapport terreau : sable étant avantageusement de (1:1) (v:v),
le rapport poudre de termitières : substrat étant inférieur à 10% et avantageusement compris de 1% (m:v) à 10% (m:v) et préférentiellement de 1% (m:v) à 5% (m:v) et valant plus préférentiellement 1% (m:v).

7. Composition selon la revendication 6 dans laquelle la poudre de termitières provient de termites du genre Cubitermes ou Macrotermes.

8. Procédé de lutte contre les nématodes phytoparasites dans des espaces destinés aux cultures, notamment céréalières, fourragères, maraîchères, fruitières, ou horticoles, dans lesquels un inoculum a été introduit, l'inoculum étant préparé par mélange de poudre de termitières avec un substrat, ladite poudre étant éventuellement broyée.

9. Procédé selon la revendication 8, dans lequel la taille des particules de ladite poudre de termites est comprise de 1 µm à 1000 µm (merci de nous préciser la taille des particules) et préférentiellement de 1 µm à 500 µm.

10. Procédé selon la revendication 8 ou 9, dans lequel la poudre de termitières provient de termites du genre Cubitermes ou Macrotermes.

11. Procédé selon l'une des revendications 8 à 10, dans lequel l'inoculum est préparé par mélange de la dite poudre de termitières avec un substrat, ledit substrat étant choisi parmi le compost provenant de résidus de culture, préférentiellement de terreau, éventuellement mélangé à du sable, le rapport terreau : sable étant avantageusement (1 :1) (v:v); le rapport poudre de termitières : substrat étant compris de 1% (m:v) à 10% (m:v) préférentiellement de 1% (m:v) à 5% (m:v) et valant plus préférentiellement 1% (m:v).

12. Procédé selon l'une des revendications 8 à 11, dans lequel l'inoculum est introduit dans des espaces destinés aux cultures à des doses comprises de 1 à 25 ml d'inoculum par élément unitaire de culture, préférentiellement de 1 à 10 ml d'inoculum, et plus préférentiellement à une dose de 1ml d'inoculum, le dit élément unitaire de culture étant notamment une graine ou une plante.

13. Procédé selon l'une des revendications 8 à 12, dans lequel une graine est semée ou un plant est transféré par dose d'inoculum introduite dans des espaces destinés aux cultures.

14. Procédé de lutte contre les nématodes phytoparasites selon l'une des revendications 8 à 13 comprenant les étapes suivantes :
a. prélèvement et éventuellement broyage de poudre de termitières, la taille des particules de ladite poudre étant comprise de 1 µm à 1000 µm et préférentiellement de 1 µm à 500 µm ),
b. préparation d'un inoculum par mélange de ladite poudre avec un substrat, ledit substrat étant choisi parmi le compost provenant de résidus de culture, préférentiellement de terreau, éventuellement mélangé à du sable, le rapport terreau: sable étant avantageusement (1 :1) (v:v), le rapport poudre de termitières: substrat étant compris de 1 % (m:v) à 10% (m:v) préférentiellement de 1% (m:v) à 5% (m:v) et valant plus préférentiellement 1% (m:v),
c. introduction de l'inoculum dans des espaces destinés aux cultures à des doses comprises de 1 à 25 ml d'inoculum par élément unitaire de culture, préférentiellement de 1 à 10 ml d'inoculum par élément unitaire de culture, et plus préférentiellement à une dose de 1ml d'inoculum par élément unitaire de culture,
d. semis d'une graine ou transfert d'un plant dans des espaces destinés aux cultures contenant l'inoculum.

## Claims

1. Use of termite nest powder as an agent for controlling phytoparasitic nematodes.

2. Use according to Claim 1, wherein the termite nest powder is obtained from termites belonging to the genus Cubitermes or Macrotermes.

3. Use according to Claim 2, wherein the termite nest powder is associated with a substrate in order to make up an inoculum.

4. Use according to any of Claims 1 - 3, wherein the amount of termite nest powder in relation to the substrate is below 10% (m:v) and advantageously between 1% (m:v) - 10% (m:v), preferentially between 1% (m:v) - 5% (m:v), and more preferentially 1%.

5. Use according to any of Claims 1 - 4, notably in areas for the cultivation of cereal, fodder, garden, fruit or horticultural crops.

6. Composition of matter comprising :
a. termite nest powder, wherein the particle size in said powder is between 1 µm - 1,000 µm and preferentially between 1 µm - 500 µm
b. said substrate is chosen from among garden mould from cultivation residues, preferentially garden mould, which, if need be, may be mixed with sand, the garden mould : sand ratio being advantageously (1:1) (v:v),
the termite nest powder : substrate ratio being below 10% and advantageously between 1% (m:v) - 10% (m:v), preferentially between 1% (m:v) - 5% (m:v) and more preferentially being 1% (m:v).

7. Composition of matter according to Claim 6, wherein the termite nest powder is obtained from termites belonging to the genus Cubitermes or Macrotermes.

8. A method for the control of phytoparasitic nematodes in areas to be cultivated, notably for cereal, fodder, garden, fruit or horticultural crops, wherein an inoculum has been introduced, the inoculum having been prepared by mixing termite nest powder with a substrate, said powder being, if need be, later comminuted.

9. A method according to claim 8, wherein the particle size of said termite nest powder is between 1 µm - 1,000 µm (particle size should be more precisely determined) and preferentially between 1 µm - 500 µm.

10. A method according to claims 8 or 9, wherein the termite nest powder is obtained from termites belonging to the genus Cubitermes or Macrotermes.

11. A method according to claims 8 - 10, wherein the inoculum is prepared by mixing said termite nest powder with a substrate, said substrate being chosen from among compost obtained from cultivation residues, preferentially garden mould, which, if need be, is mixed with sand, the garden mould : sand ratio being advantageously (1 :1) (v:v), the termite nest powder : substrate ratio being between 1% (m:v) - 10% (m:v), preferentially between 1% (m:v) - 5% (m:v), and more preferentially being 1% (m:v).

12. A method according to any of claims 8 - 11, wherein the inoculum is introduced in areas for cultivation at doses between 1 - 25 ml inoculum for each cultivation unit element, preferentially between 1 - 10 ml inoculum, and more preferentially at a dose of 1 ml inoculum, said cultivation unit element being notably a grain or a plant.

13. A method according to any of claims 8 - 12, wherein a grain is sown or a plant is transferred for each dose of inoculum which is introduced in areas for cultivation.

14. A method for the control of phytoparasitic nematodes according to any of claims 8 - 13 comprising the following steps :
a. collection and, if need be, comminuting of termite nest powder, wherein the particle size of said powder is between 1 µm - 1,000 µm and preferentially between 1 µm - 500 µm ),
b. preparation of an inoculum by mixing said powder with a substrate, said substrate being chosen from among compost obtained from cultivation residues, preferentially from garden mould, which, if need be, is mixed with sand, the garden mould : sand ratio being advantageously (1 :1) (v:v), the termite nest powder : substrate ratio being between 1 % (m:v) - 10% (m:v), preferentially between 1% (m:v) - 5% (m:v) and more preferentially being 1% (m:v),
c. introduction of the inoculum into areas to be cultivated at doses between 1 - 25 ml inoculum for each cultivation unit element, preferentially between 1 - 10 ml inoculum for each cultivation unit element, and more preferentially at a dose of 1 ml inoculum for each cultivation unit element,
d. sowing of a grain or transfer of a plant into areas to be cultivated with crops containing the inoculum.

## Patentansprüche

1. Verwendung von Termitenbaupulver als Mittel zur Bekämpfung von phytoparasitischen Nematoden.

2. Verwendung nach Anspruch 1, wobei das Termitenbaupulver von Termiten der Gattung Cubitermes oder Macrotermes stammt.

3. Verwendung nach Anspruch 2, wobei das Termitenbaupulver mit einem Substrat assoziiert ist, um einen Impfstoff zu bilden.

4. Verwendung nach einem der Ansprüche 1 bis 3, wobei die Menge an Termitenbaupulver bezogen auf das Substrat kleiner als 10 % (m:v) ist und vorteilhafterweise im Bereich von 1 % (m:v) bis 10 % (m:v) und bevorzugt von 1 % (m:v) bis 5 % (m:v) liegt, und stärker bevorzugt gleich 1 % ist.

5. Verwendung nach einem der Ansprüche 1 bis 4 in Räumen, die zum Anbau, insbesondere zum Getreideanbau, Futtermittelanbau, zur Marktgärtnerei, zum Obstanbau oder für den Gartenbau bestimmt sind.

6. Zusammensetzung, umfassend:
a. Termitenbaupulver, wobei die Größe der Teilchen, die das Pulver bilden, im Bereich von 1 µm bis 1.000 µm und bevorzugt von 1 µm bis 500 µm liegt,
b. das Substrat, das aus dem Kompost ausgewählt ist, der aus Ernterückständen stammt, bevorzugt aus Humus, gegebenenfalls mit Sand gemischt, wobei das Verhältnis Humus:Sand vorteilhafterweise (1:1) (v:v) beträgt,
wobei das Verhältnis Termitenbaupulver:Substrat kleiner als 10 % ist und vorteilhafterweise im Bereich von 1 % (m:v) bis 10 % (m:v) und bevorzugt von 1 % (m:v) bis 5 % (m:v) liegt, und stärker bevorzugt gleich 1 % (m:v) ist.

7. Zusammensetzung nach Anspruch 6, wobei das Termitenbaupulver von Termiten der Gattung Cubitermes oder Macrotermes stammt.

8. Verfahren zur Bekämpfung von phytoparasitischen Nematoden in Räumen, die zum Anbau, insbesondere zum Getreideanbau, Futtermittelanbau, zur Marktgärtnerei, zum Obstanbau oder für den Gartenbau bestimmt sind, in die ein Impfstoff eingeführt wurde, wobei der Impfstoff durch das Mischen von Termitenbaupulver mit einem Substrat hergestellt wurde, wobei das Pulver gegebenenfalls zerkleinert wurde.

9. Verfahren nach Anspruch 8, wobei die Größe der Teilchen des Termitenbaupulvers im Bereich von 1 µm bis 1.000 µm (Bitte die Größe der Teilchen noch exakt angeben!) und bevorzugt von 1 µm bis 500 µm liegt.

10. Verfahren nach Anspruch 8 oder 9, wobei das Termitenbaupulver von Termiten der Gattung Cubitermes oder Macrotermes stammt.

11. Verfahren nach einem der Ansprüche 8 bis 10, wobei der Impfstoff durch das Mischen des Termitenbaupulvers mit einem Substrat hergestellt wird, wobei das Substrat aus dem Kompost ausgewählt ist, der aus Ernterückständen stammt, bevorzugt aus Humus, gegebenenfalls mit Sand gemischt, wobei das Verhältnis Humus:Sand vorteilhafterweise (1:1) (v:v) beträgt, wobei das Verhältnis Termitenbaupulver:Substrat im Bereich von 1 % (m:v) bis 10 % (m:v), bevorzugt von 1 % (m:v) bis 5 % (m:v) liegt, und stärker bevorzugt gleich 1 % (m:v) ist,

12. Verfahren nach einem der Ansprüche 8 bis 11, wobei der Impfstoff in Räume, die zum Anbau bestimmt sind, mit Dosen im Bereich von 1 bis 25 ml Impfstoff pro Anbau-Einzelelement bevorzugt 1 bis 10 ml Impfstoff und stärker bevorzugt mit einer Dosis von 1 ml Impfstoff eingeführt wird, wobei das Anbau-Einzelelement insbesondere ein Samenkorn oder eine Pflanze ist.

13. Verfahren nach einem der Ansprüche 8 bis 12, wobei, pro Dosis Impfstoff, der in die Räume, die zum Anbau bestimmt sind, eingeführt wird, ein Samenkorn gesät oder eine Pflanze umgepflanzt wird.

14. Verfahren zur Bekämpfung von phytoparasitischen Nematoden nach einem der Ansprüche 8 bis 13, das die folgenden Schritte umfasst:
a. Entnehmen und gegebenenfalls Zerkleinern von Termitenbaupulver, wobei die Größe der Teilchen des Pulvers im Bereich von 1 µm bis 1.000 µm und bevorzugt von 1 µm bis 500 µm liegt,
b. Herstellen eines Impfstoff durch das Mischen des Termitenbaupulvers mit einem Substrat, wobei das Substrat aus dem Kompost ausgewählt ist, der aus Ernterückständen stammt, bevorzugt aus Humus, gegebenenfalls mit Sand gemischt, wobei das Verhältnis Humus:Sand vorteilhafterweise (1:1) (v:v) beträgt, wobei das Verhältnis Termitenbaupulver:Substrat im Bereich von 1 % (m:v) bis 10 % (m:v), bevorzugt von 1 % (m:v) bis 5 % (m:v) liegt, und stärker bevorzugt gleich 1 % (m:v) ist,
c. Einführen des Impfstoffs in Räume, die zum Anbau bestimmt sind, mit Dosen im Bereich von 1 bis 25 ml Impfstoff pro Anbau-Einzelelement, bevorzugt 1 bis 10 ml Impfstoff pro Anbau-Einzelelement, und stärker bevorzugt mit einer Dosis von 1 ml Impfstoff pro Anbau-Einzelelement,
d. Säen eines Samenkorns oder Umpflanzen einer Pflanze in Räume, die zum Anbau bestimmt sind, die Impfstoff enthalten.
